(19) Europäisches Patentamt
European Patent Office
Office européen des brevets

(11) Veröffentlichungsnummer: **0 054 216**
**B1**

# (12) EUROPÄISCHE PATENTSCHRIFT

(45) Veröffentlichungstag der Patentschrift: **06.06.84**

(51) Int. Cl.³: **C 09 D 3/64,** C 08 G 63/20

(21) Anmeldenummer: **81110029.6**

(22) Anmeldetag: **01.12.81**

(54) **Wässrige Dispersionen von Polyestern, Verfahren zu ihrer Herstellung und ihre Verwendung zur Herstellung von Einbrennlacken.**

(30) Priorität: **11.12.80 DE 3046586**

(43) Veröffentlichungstag der Anmeldung: **23.06.82 Patentblatt 82/25**

(45) Bekanntmachung des Hinweises auf die Patenterteilung: **06.06.84 Patentblatt 84/23**

(84) Benannte Vertragsstaaten: **AT DE FR GB IT NL SE**

(56) Entgegenhaltungen:
**US - A - 4 054 614**
**US - A - 4 222 919**
**US - E - 30 660**

(73) Patentinhaber: **BAYER AG, Konzernverwaltung RP Patentabteilung, D-5090 Leverkusen 1 Bayerwerk (DE)**

(72) Erfinder: **Zabrocki, Karl, Dr., Edelfalter 33, D-4044 Büttgen (DE)**
Erfinder: **Williams, John, Dr., 121, Fairview Drive, New Martinsville West Virginia 26155 (US)**
Erfinder: **Beer, Wolfgang, Dr., Heyenfeldweg 132, D-4150 Krefeld (DE)**
Erfinder: **Traenckner, Hans-Joachim, Dr., Wedelstrasse 46, D-4150 Krefeld (DE)**

**EP 0 054 216 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft wäßrige Dispersionen von Bindemitteln auf Basis ölfreier Polyester, ein Verfahren zu ihrer Herstellung in zwei Stufen und ihre Verwendung zur Herstellung von Einbrennlacken.

Unter »wäßrigen Dispersionen« werden im folgenden heterogene, undurchsichtige Systeme verstanden, bei denen die organische Harzphase als Teilchen einer mittleren Größe von 100—1000 nm in der Wasserphase verteilt ist. Unter den Begriff »wäßrige Dispersionen« fallen somit nicht jene Polyester-Lösungen, die durch neutralisierte Säuregruppen in wäßriger Phase durchsichtige Lösungen mit Teilchengrößen $<30$ nm bilden; derartige Harze besitzen in der Regel Säurezahlen $\geq 40$, werden in wassermischbaren organischen Flüssigkeiten vorgelöst und nach der Neutralisation mit Wasser zu homogenen, durchsichtigen Lösungen verdünnt.

Für den zunehmenden Einsatz wäßriger Polyesterdispersionen sprechen hauptsächlich zwei Gründe:

Erstens besitzen sie den Vorteil, daß man auf die Verwendung organischer Lösungsmittel verzichten kann, und zweitens neigen sie — anders als die aus organischer Lösung applizierten Überzugsmittel — kaum zum Ablaufen an senkrechten Flächen (vgl. F. Armitage, L. G. Trace, J. Oil and Colour Chemists Assoc. 1957, S. 860).

Von Lackierungen, die nach der sog. Coil-Coat-Technik (d. h. Lackierung einer fortlaufenden Blechbahn, die erst nach der Härtung des Lackfilms verformt wird) hergestellt werden, erwartet man Hochglanz, große Härte, hohe Elastizität und ausgezeichnete Haftung.

Polyester-Bindemittel in wäßriger Zubereitung sind bekannt (GB 1 046 014, DE-AS 1 669 141, DE-OS 2 837 552), haben sich aber auf dem Coil-Coat-Sektor bis jetzt nicht durchsetzen können. Es bestand also ein Bedarf an lagerstabilen wäßrigen Dispersionen ölfreier Polyester für diesen Zweck. In der Vergangenheit hatte sich gezeigt, daß frisch bereitete wäßrige Polyesterdispersionen zwar bei unmittelbarer Verarbeitung zu glänzenden Coil-Coat-Beschichtungen führen, bei Applizierung nach längerer Lagerzeit aber zu Lackierungen mit vermindertem Glanz führen, d. h. daß also eine »Glanzdrift« existiert.

Überraschenderweise wurde nun gefunden, daß man Bindemittel mit der gewünschten Kombination guter Eigenschaften erhält, wenn man ölfreie Polyester mit einer Säurezahl unter 8 mit bestimmten cyclischen Dicarbonsäureanhydriden bis zu einer Säurezahl von 13 bis 25 »aufsäuert« und den erhaltenen Polyester-Polyhalbester in wäßriger Phase dispergiert.

Die Eigenschaften der mit den erfindungsgemäßen Dispersionen erhältlichen Lackierungen erscheinen umso überraschender, als von ähnlichen, aber wasserlöslichen Polyestern bekannt ist, daß gerade die erfindungsgemäß benutzten Dicarconsäureanhydride schlechten Glanz ergeben (DE-OS 1 669 141).

Gegenstand der Erfindung sind also wäßrige Dispersionen aus

A) 25 bis 60 Gew.-% ölfreier Polyester mit einem mittleren Molekulargewicht $\overline{M}_n$ von 1000 bis 10 000,
B) 3 bis 15 Gew.-% mindestens eines Emulgators und
C) 25 bis 62 Gew.-% wäßriger Phase,

jeweils bezogen auf die Summe der Komponenten A, B und C, dadurch gekennzeichnet, daß der Polyester A eine Säurezahl von 13 bis 25, vorzugsweise von 18 bis 22, besitzt und durch Reaktion eines Polyesters einer Säurezahl unter 8 mit einem Dicarbonsäureanhydrid der Formel

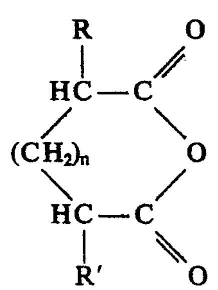

(I)

worin

R, R' ein Wasserstoffatom, einen $C_1-C_8$-Alkylrest oder einen $C_5-C_8$-Cycloalkylrest und
n Null oder 1 bedeuten,

erhältlich ist.

Unter Polyestern versteht man im Rahmen des vorliegenden Textes durch Polykondensation nach bekannten Verfahren aus Alkoholen und Carbonsäuren hergestellte, ölfreie Polykondensate, wie sie z. B. in Römpp's Chemielexikon, Bd. 1, S. 202, Frankh'sche Verlagsbuchhandlung, Stuttgart, 1966,

definiert oder bei D. H. Solomon, The Chemistry of Organic Filmformers, S. 75 bis 101, John Wiley & Sons Inc., New York, 1967, beschrieben sind.

Für die Synthese der Polyester A bevorzugte Alkohole sind aliphatische, cycloaliphatische und/oder araliphatische Alkohole mit 1 bis 6, vorzugsweise 2 bis 4, an nicht-aromatische C-Atome gebundene OH-Gruppen und 1 bis 24 C-Atomen pro Molekül, z. B. Glykole wie Ethylenglykol, Propylenglykol, Butandiole, Neopentylglykol, Trimethylpentandiol-1,3, Hexandiole; Di- und Triethylenglykole; oxethylierte Bisphenole mit 2 Alkylenoxidresten pro Molekül; perhydrierte Bisphenole; ferner Trimethylolethan, -propan und -hexan, Glycerin, Pentaerythrit, Dipentaerythrit, Dimethylolcyclohexan, einwertige, kettenabbrechende Alkohole wie Methanol, Propanol, Butanol, Cyclohexanol, 2-Ethylhexanol und Benzylalkohol.

Besonders bevorzugte Alkohole sind Trimethylolpropan sowie Neopentylglykol, Ethylenglykol, Hexandiol-1,6 und Dihydroximethylpropionsäure.

Für die Synthese der Polyester A bevorzugte Säurekomponenten sind aliphatische, cycloaliphatische, gesättigte oder ungesättigte und/oder aromatische mehrbasische Carbonsäuren, vorzugsweise D- und Tricarbonsäuren, mit 4 bis 12 C-Atomen pro Molekül oder deren veresterungsfähige Derivate (z. B. Anhydride oder Ester), z. B. Phthalsäureanhydrid, Isophthalsäure, Terephthalsäure, Tetrahydro- und Hexahydrophthalsäureanhydrid, Trimellithsäureanhydrid, Pyromellithsäureanhydrid, Maleinsäureanhydrid, Furmarsäure, Adipinsäure, Glutarsäure und Bernsteinsäureanhydrid, Azelainsäure, Endomethylentetrahydrophthalsäure, ferner halogenierte Säuren, wie Chlorphthalsäuren und Hexachlorendomethylentetrahydrophthalsäure.

Für die erste Kondensationsstufe besonders bevorzugte mehrbasische Carbonsäuren sind Dicarbonsäuren wie Phthalsäure, Isophthalsäure, Adipinsäure, Tetra- und Hexahydrophthalsäure. Für die Aufsäuerungsstufe verwendet man bevorzugt Bernsteinsäureanhydrid, Glutarsäureanhydrid sowie die Anhydride alkylsubstituierter Bernsteinsäuren.

Die Polyester A können allein aus mehrwertigen Carbonsäuren und mehrwertigen Alkoholen aufgebaut werden. Es ist aber auch möglich, sie durch Einkondensation von Monocarbonsäuren und/oder einwertigen Alkoholen zu modifizieren. Bevorzugte Monocarbonsäuren sind gesättigte Fettsäuren mit 6—35 C-Atomen wie $\alpha$-Ethylhexansäuren, Isononansäure (1,4,4-Trimethylhexansäure), Stearinsäure oder hydrierte natürliche Fettsäuregemische, aber auch Benzoesäure, Toluylsäure, Hexahydrobenzoesäure, p-tert-Butylbenzoesäure. Bevorzugte einwertige Akohole sind solche mit 1—20 C-Atomen, z. B. Methanol, Ethanol, Cyclohexanol, Benzylalkohol. Die Polyesterharze A können einwertige Kondensationspartner bis zu 20 Gew.-%, bezogen auf den Polyester A, einkondensiert enthalten. Es ist auch möglich, bis zu 15% der Esterbindungen durch Urethanbindungen zu ersetzen.

Die Auswahl von Art und Menge der zum Polyester A zu kondensierenden Rohstoffe richtet sich nach dem gewünschten Molekulargewicht und nach dem Einsatzgebiet des damit herzustellenden Lackes. Die Zusammenhänge sind bei U. Holfort, Farbe und Lack 68 (1962), S. 513—517 und 598—607, beschrieben.

Hohe Gehalte aromatischer Bestandteile verleihen dem Überzug besondere Härte, was sich z. B. in erhöhter Kratz- und Druckfestigkeit des Überzugs niederschlägt. Hohe Gehalte aliphatischer Bestandteile geben gute Elastizität und damit hohe Verformbarkeit. Bei Bindemitteln für Coil-Coat-Anwendungen beträgt der Anteil aromatischer Bestandteile in der Regel weniger als 40 Gew.-%, bezogen auf Polyester A.

Das als Zahlenmittel bestimmte Molekulargewicht der Polyester A beträgt 1000 bis 10 000, vorzugsweise 1500 bis 3000 (bis zu Molekulargewichten von 5000 dampfdruckosmometrisch in Dioxan und Aceton bestimmt, wobei bei differierenden Werten der niedrigere Wert als korrekt angesehen wird; bei Molekulargewichten über 5000 membranosmometrisch in Aceton bestimmt).

Die Herstellung der Polyester kann nach bekannten Verfahren erfolgen; vgl. »Methoden der Organischen Chemie (Houben-Weyl), Bd. 14/2, Teil 2, 4. Aufl., Georg Thieme Verlag, Stuttgart 1963, S. 1—5, 21—23, 40—44 oder C. R. Martens, Alkyd Resins, Reinhold Plastics Appl. Series, Reinhold Publ. Comp. 1961, S. 51—59. Danach werden mehrwertige und gegebenenfalls einwertige Alkohole sowie mehrbasische und gegebenenfalls einbasische Carbonsäuren oder deren veresterungsfähige Derivate durch Schmelz- oder Azeotropveresterung, bevorzugt in einer Inertatmosphäre, z. B. bei Temperaturen von 140—260° C, umgesetzt. Die Reaktion kann mittels Messung von Säurezahl und Viskosität verfolgt werden.

Die Synthese der Polyester A erfolgt zweistufig; in der ersten Stufe werden Alkohole und Carbonsäuren bis zu Säurezahlen $<8$, vorzugsweise $<5$ und OH-Zahlen von vorzugsweise 35—100 umgesetzt. Die zweite Stufe besteht in der Reaktion des Polyesters mit dem Säureanhydrid der Formel I unter Bedingungen, bei denen Halbesterbildung, evtl. aber auch geringe Weiterkondensation, stattfindet. Der erhaltene Polyester A besitzt vorzugsweise OH-Zahlen von 20 bis 90.

Die Viskosität des Polyesters A, gemessen nach DIN 53 211 (DIN Becher 4) als 50gew.-%ige Lösung in Xylol oder Butylacetat, entspricht in der Regel einer Auslaufzeit von 20 bis 400 sec.

Die Polyester A sind wasserunlösliche, schmelzbare Massen, welche in den angegebenen Mengen ohne weitere Zusätze nicht in wäßriger Phase verteilbar sind. Es ist deswegen auch nicht erwünscht, sie durch Einbau größerer Anteile von Polyetherpolyolen, z. B. sog. Polywachsen, zu modifizieren, da derartige Bestandteile hydrphil machen, was sich in geringerer Wasserbeständigkeit der aus den

erfindungsgemäßen Dispersionen hergestellten Überzüge auswirkt.

Wäßrige Dispersionen der Polyesterharze A können hergestellt werden, indem man zuerst den Polyester A herstellt und ihn anschließend mit Hilfe der Emulgatoren B in wäßriger Phase dispergiert.

Die Polyester A können in wäßriger Phase dispergiert werden, indem man sie zusammen mit mindestens einem Emulgator und gegebenenfalls weiteren Zusatzstoffen in wasserverträglichen oder teilweise wasserverträglichen Lösungsmitteln, wie z. B. Aceton, Ethylalkohol, Isopropanol, löst, diese Lösung in die wäßrige Phase einrührt und das organische Lösungsmittel anschließend durch Verdampfung entfernt.

Bevorzugt wird hingegen ein Verfahren, wonach der Polyester A in der Schmelze bei 80—120° C mit den Zuschlägen innig verrührt und anschließend in diese Schmelze die wäßrige Phase eingerührt wird.

Dieser Prozeß kann in der Regel in einem zur Herstellung von Alkydharzen üblichen Reaktor vorgenommen werden. Schnellaufende Mischaggregate oder Rührwerke sind dabei meist nicht erforderlich. Selbstverständlich kann die Schmelzdispergierung auch durch Zugabe der organischen Harzphase in die wäßrige Phase erfolgen. Dabei ist es auch möglich, die Emulgatoren in der wäßrigen Phase vorzulegen und den emulgatorfreien Polyester A in das Gemisch von Emulgatoren und wäßriger Phase einzutragen.

Weiterer Gegenstand der Erfindung ist also ein Verfahren zur Herstellung von wäßrigen Dispersionen aus

A) 25 bis 60 Gew.-% ölfreier Polyester mit einem mittleren Molekulargewicht $\overline{M}_n$ von 1000 bis 10 000,
B) 3 bis 15 Gew.-% mindestens eines Emulgators und
C) 25 bis 62 Gew.-% wäßriger Phase, jeweils bezogen auf die Summe der Komponenten A, B und C,

dadurch gekennzeichnet, daß der Polyester A eine Säurezahl von 13 bis 25, vorzugsweise 18 bis 22, besitzt und durch Reaktion eines Polyesters einer Säurezahl unter 8 mit einem Dicarbonsäureanhydrid der Formel

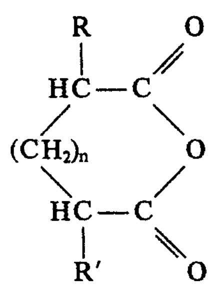

(I)

worin

R, R' ein Wasserstoffatom, einen $C_1$—$C_8$-Alkylrest oder einen $C_5$—$C_8$-Cycloalkylrest und
n Null oder 1 bedeuten,

erhältlich ist und daß man den Polyester A in der Schmelze bei Temperaturen von 80 bis 120° C mit dem Emulgator B homogenisiert und in diese Schmelze das Wasser bzw. die wäßrige Phase C oder umgekehrt die Schmelze in das Wasser bzw. in die wäßrige Phase C einrührt.

Die zur Dispergierung der Polyester A benötigten Emulgatoren B können nicht-ionischer (a) oder ionischer Art (b) oder Mischtypen sein, wie sie z. B. in »Methoden der Organischen Chemie« (Houben-Weyl), Bd. 14/1, Teil 1, 4. Auflage, Georg Thieme Verlag, Stuttgart 1961, s. 190—208, beschrieben sind.

Bevorzugte nichtionische Emulgatoren a) sind Verbindungen der Formel

$$R^1—O—R_x^2H; \quad R^3—CO—O—R_y^4H$$

worin

R[1] und R[3] eine aliphatische, cycloaliphatische, araliphatische oder aromatische Gruppe mit 7—25 C-Atomen,
R[2] und R[4] $C_2H_4O$, $C_3H_6O$ oder $C_4H_8O$ und
x und y ganze Zahlen von 3 bis 100

bedeuten.

Andere bevorzugte nichtionische Emulgatoren a) sind ethoxylierte, gegebenenfalls aliphatisch substituierte, Phenole. So erhält man erfindungsgemäße Polyesterdispersionen mit besonders einheitlichen Teilchengrößen bei der Verwendung von ethoxyliertem p-n-Nonylphenol. Andere bevorzugte Emulgatoren a) erhält man durch Ethoxylierung von Anlagerungsprodukten von Styrol und seinen

Derivaten an Phenole, wie dies z. B. in der DE-PS 1 121 814 beschrieben ist. Danach werden Styrol, $\alpha$-Methylstyrol oder Vinyltoluol an Phenol, Kresole oder Xylenole angelagert und die erhaltenen Reaktionsprodukte ethoxyliert.

Bevorzugte nicht-ionische Emulgatoren a) haben berechnete HLB-Werte von 10 bis 20 und entsprechen der Formel

$$R^5-(OCH_2-CH_2)_p-OH$$

worin

$R^5$ einen Alkylrest mit 12 bis 20 C-Atomen oder

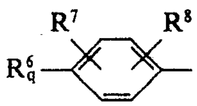

$R^6$ einen Alkylrest mit 4 bis 20 C-Atomen oder

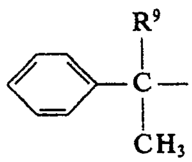

$R^7$, $R^9$ ein Wasserstoffatom, einen Methyl- oder Phenylrest,
$R^8$ eine Methylgruppe oder ein Wasserstoffatom,
p eine Zahl von 10 bis 40, vorzugsweise 15 bis 25, und
q eine Zahl von 1 bis 3

bedeuten.

Bezüglich HLB-Werte siehe Ullmanns Enzyklopädie der Technischen Chemie, 4. Auflage, Bd. 10, S. 462—463, Verlag Chemie, Weinheim 1975.

Bevorzugte ionische Emulgatoren b) sind $C_{12-18}$-Alkylsulfate, -sulfonate und -carboxylate.

Bevorzugte Mischtyp-Emulgatoren lassen sich z. B. durch Sulfatierung der Hydroxylgruppen der nichtionischen Emulgatoren gewinnen.

Ferner sind auch Oligomere und Polymere als Emulgatoren B verwendbar. Darunter fallen z. B. auch Schutzkolloide wie Casein.

Als bevorzugte Emulgatoren B kommen außerdem modifizierte Polyester, welche direkt über Esterbindungen oder über ein Verbindungsstück mit einer oder mehreren Polyalkylenoxiden mit 2—4 C-Atomen pro Alkylrest gekoppelt sind, in Betracht, wobei sich dieses Verbindungsstück von einem Melaminharz, Polyisocyanat oder Silicon ableiten kann (vgl. DE-OS 2 455 896, 2 503 388, 2 503 389, 2 528 212, 2 555 896, 2 556 621). Diese Emulgatoren enthalten über 5 Gew.-% Polyalkylenoxideinheiten.

Diese modifizierten Polyester werden nachfolgend auch Emulgatorharze genannt.

Bevorzugte Emulgatorharze B bestehen aus einem gegebenenfalls ölmodifizierten Polyesterteil (hydrophob) und einem, gegebenenfalls durch Alkoxygruppen mit 1 bis 4 C-Atomen terminierten, Polyalkylenoxidteil (hydrophil) mit 6 bis 100, vorzugsweise 10 bis 70, Alkylenoxidresten pro Polyalkylenoxidkette, wobei der Polyalkylenoxidteil aus mehreren einzelnen Polyalkylenoxidketten besteht und die Alkylengruppe 2 bis 4, vorzugsweise 2 C-Atome enthält.

Die Emulgatorharze B können 0,1 bis 10 Gew.-%, bezogen auf Emulgatorharz, Urethangruppen enthalten. Nach einer bevorzugten Ausführungsform werden die einseitig blockierten (z. B. veretherten) Polyalkylenoxide mit etwa äquimolaren Mengen Diisocyanat umgesetzt, so daß Polyalkylenoxide entstehen, die pro Molekül eine freie Isocyanatgruppe tragen, welche dann ihrerseits zur Anknüpfung an den Polyesterteil des Emulgatorharzes dienen kann.

Solche Emulgatorharze B können aus einem OH-reichen Polyester aus Basis Phthalsäure und/oder Tetrahydrophthalsäure und Trimethylolpropan durch Umsetzung im Sinne der DE-OS 2 556 621 und 2 528 212 mit einem Polyethylenoxid-Isocyanat-Vorkondensat hergestellt werden, wobei der Gehalt an Polyethylenoxidresten, bezogen auf Emulgatorharz, zwischen 10 und 20 Gew.-% liegt und die Polyethylenoxideinheiten mittlere Molekulargewichte zwischen 400 und 3000 aufweisen.

Das mittlere Molekulargewicht der für die Herstellung der Emulgatorharze bevorzugten Polyester kann 400 bis 4000 betragen (dampfdruckosmometrisch an Aceton bestimmt).

Die verwendeten Polyalkylenoxide können Homopolyether, aber auch Copolyether in Block- oder statistischer Verteilung sein; Homopolyethylenoxide sind besonders bevorzugte Ausgangsmaterialien für die Herstellung der Emulgatorharze.

Als Verknüpfer zwischen Polyester- und Polyalkylenoxidteil kommen im Prinzip sämtliche Diisocyanate in Betracht.

Besonders bevorzugt werden in der Regel die technisch leicht zugänglichen Polyisocyanate, z. B. das 2,4- und 2, 6-Toluylendiisocyanat sowie beliebige Gemische dieser Isomeren (»TDI«), 1,6-Hexamethylendiisocyanat, Perhydro-2,4'- und/oder -4,4'-diphenylmethan-diisocyanat und 1-Isocyanato-3,3,5-trimethyl-5-isocyanato-methylcyclohexan.

Zu besonders homogenen Dispersionen führen Emulgatorharze B, die man dadurch herstellt, daß man einen Polyester mit Ölgehalten von 0—30 Gew.-% mit einer Säurezahl von < 5 und einer Hydroxylzahl von 50—250 als hydrophoben Teil herstellt, diesen mit den bereits erwähnten hydrophilen Isocyanatkomponenten bis zum völligen Umsatz der NCO-Gruppen abreagieren läßt, anschließend mit einem Dicarbonsäureanhydrid auf Säurezahlen von 15—35 aufsäuert und entweder durch direkte Zugabe eines Amins in die Harzschmelze oder durch Zugabe der Harzschmelze in die Amin und gegebenenfalls Emulgator a) enthaltende Wasserphase neutralisiert. Im letztgenannten Verfahren fällt das Emulgatorharz zusammen mit dem Emulgator a) als wäßrige Lösung bzw. Dispersion, als sogenanntes Emulgatorkonzentrat, an.

Menge und Art des Emulgatorharzes B werden am besten so gewählt, daß der Gesamtgehalt an Polyalkylenoxideinheiten im nichtflüchtigen Anteil der erfindungsgemäßen Dispersion unterhalb 4 Gew.-%, bezogen auf die Summe der als Feststoff berechneten Komponenten A und B, liegt.

Nach einer bevorzugten Ausführungsform enthält das Emulgatorharz B im nichtneutralisierten Zustand Carboxylgruppen entsprechend einer Säurezahl von weniger als 50, vorzugsweise 15 bis 35. Das Emulgatorharz B kann bereits vor der Vereinigung mit der wäßrigen Phase C teilweise oder ganz neutralisiert werden. Bevorzugte Neutralisationsmittel sind Alkalihydroxide, Ammoniak, primäre, sekundäre und tertiäre Amine, wie z. B. Ethylamin, Di- und Triethylamin, Mono-, Di- und Triethanolamin, Dimethylethanolamin, Methyldiethanolamin, Dimethylaminomethylpropanol. Die Neutralisation kann aber auch bei Zugabe in die wäßrige Phase C erfolgen.

Zur Herstellung der Dispersionen der Polyester A können grundsätzlich sämtliche der beschriebenen Emulgatoren einzeln und in Mischung verwendet werden.

Besonders gute Dispersionen erhält man bei der Verwendung von Gemischen aus einem Emulgatorharz und einem niedermolekularen ionischen oder vorzugsweise nicht-ionischen Emulgator a), wobei die Gesamtmenge der Emulgatoren nicht über 10 Gew.-%, bezogen auf die Komponente A, betragen soll.

Die besten erfindungsgemäßen Dispersionen erhält man bei Verwendung einer Emulgator-Kombination bestehend aus 0,02 bis 4 Gew.-%, bezogen auf die Summe der Komponenten A, B und C, der oben beschriebenen nichtionischen Emulgatoren mit einem berechneten HLB-Wert von 10 bis 20 und 0,02 bis 4 Gew.-%, bezogen auf die Summe der Komponenten A, B und C, mindestens eines polyethermodifizierten Polyester-Emulgatorharzes, das 10 bis 50, vorzugsweise 10 bis 20 Gew.-%, bezogen auf Emulgatorharz, einkondensierte Polyalkylenglykolreste, vorzugsweise über Urethangruppen mit dem Polyester-Emulgatorharz-Molekül verbunden, enthält.

Die Polyester A können in der bereits beschriebenen Weise in wäßriger Phase dispergiert werden.

Als vom Arbeitsablauf her besonders günstig hat sich ein Verfahren erwiesen, bei dem in der wäßrigen Phase C die Emulgatoren B in einem Rührkessel vorgelegt und anschließend die Polyesterschmelze A unter Rühren zudosiert werden. Die Temperaturen im Mischkessel betragen dabei 40—95, vorzugsweise 50—80° C.

Die wäßrige Phase C enthält neben Wasser gegebenenfalls Nautralisationsmittel, dessen Menge so zu bemessen ist, daß sie zur teilweisen oder völligen Neutralisation der im Polyesterharz A gegebenenfalls noch vorhandenen Carboxylgruppen ausreicht. Als Neutralisationsmittel sind Alkalien, Ammoniak oder vorzugsweise die oben genannten Amine einsetzbar.

Besonders bevorzugte Amine, die als Neutralisationsmittel für die Polyester A dienen können, entsprechen der Formel

$$R^{10}R^{11}R^{12}C-NH_2 \qquad (II)$$

worin

$R^{10}$, $R^{11}$, $R^{12}$ ein Wasserstoffatom oder ein Alkylrest mit 1 bis 6 C-Atomen und gegebenenfalls einer Hydroxylgruppe bedeuten, wobei mindestens einer der Reste von Wasserstoff verschieden ist.

Speziell bevorzugte Amine sind tert.-Butylamin, Isopropanolamin, 2-Amino-2-methylpropanol, 3-Amino-1-propanol und 2-Amino-2-methyl-propandiol-1,3.

Zweckmäßigerweise wird bei der Emulgierung in der Schmelze das Neutralisationsmittel mit einem Teil des Wassers in die Schmelze eingerührt und nach dem Homogenisieren der Rest des Wassers zur Einstellung der Dispersion auf den gewünschten Festgehalt, der im allgemeinen zwischen 30 und 60 Gew.-% liegt, zugegeben.

Die erfindungsgemäßen Dispersionen können, falls gewünscht, während oder nach ihrer Herstellung mit anderen Polymeren, z. B. Polyacrylaten, Polyurethanen sowie Hartharzen, unmodifizierten und

modifizierten Polymeren, wie sie etwa bei H. Kittel, Lehrbuch der Lacke und Beschichtungen, Bd. I, Teil 1, S. 122—445, beschrieben sind, kombiniert werden.

Zur Herstellung ofentrocknender Überzugsmittel setzt man den wäßrigen Dispersionen wasserverdünnbare Aminoplastharze zu, wobei das Gewichtsverhältnis von Polyester A zu Aminoplast (bezogen auf festes Harz) zwischen 95 : 5 bis 50 : 50 liegt, d. h. der Aminoplast-Anteil beträgt 5—50, vorzugsweise 10—30 Gew.-% Aminoplast, bezogen auf die Summe von Harz A und Aminoplast.

Als Aminoplastharze sind beispielsweise Melamin/Formaldehyd- oder Harnstoff/Formaldehyd-Kondensationsprodukte anzusehen. Melaminharze sind alle herkömmlichen nicht veretherten oder mit gesättigten Monoalkoholen mit 1 bis 4 C-Atomen veretherten Melamin/Formaldehyd-Kondensate, wie sie z. B. in der FR-PS 943 411 oder bei D. H. Solomon, The Chemistry of Organic Filmformers, 235—240, John Wiley & Sons, Inc., New York, 1967, beschrieben sind. Die Melaminharze können jedoch auch ganz oder teilweise durch andere vernetzende Aminoplasten, wie sie z. B. in »Methoden der Organischen Chemie« (Houben-Weyl), Bd. 14/2, Teil 2, 4. Auflage, Georg Thieme Verlag, Stuttgart, 1963, 319 ff. beschrieben sind, ersetzt werden.

Die erfindungsgemäßen Dispersionen sind bei Raumtemperatur monatelang lagerstabil. Als »lagerstabil« wird eine Dispersion dann bezeichnet, wenn sie für einen angegebenen Zeitraum weder sichtbare Zerfallserscheinungen wie Ausflocken, Absetzen oder dgl. noch wesentliche Änderungen in den Eigenschaften eines damit hergestellten Lackes zeigt. Die erfindungsgemäßen Dispersionen sind auch bei höheren Temperaturen, wie sie bei Lagerung in der Sonnenstrahlung ausgesetzten Behältern häufig auftreten, sehr stabil. Sie überstehen Lagerungen bei 50°C für mindestens 3 Tage, meist aber wesentlich längere Zeiten ohne Qualitätsverlust.

Man kann den erfindungsgemäßen Dispersionen übliche Hilfs- und Zusatzstoffe zusetzen, sofern sie die Stabilität der Dispersion nicht zu sehr herabsetzen, z. B. Schutzkolloide, Verlaufmittel, Antischaummittel, Antiabsetzmittel, Frostschutzmittel sowie viskositätsbeeinflussende Zusätze.

Die erfindungsgemäßen Dispersionen lassen sich in bekannter Weise zu Lacken verarbeiten. Dazu können sie — gegebenenfalls unter Zusatz von Kombinationsharzen und Wasser — falls erwünscht mit üblichen Pigmenten, wie z. B. Titandioxid, Bariumchromat, Eisenoxid u. a. nach herkömmlichen Verfahren angeteigt und verarbeitet werden. Es ist auch möglich, wäßrige Pigmentdispersionen, sog. Slurries, zu verwenden oder Zusatzharze mit dem Pigment anzureiben und anschließend mit der Dispersion zu mischen.

Mitunter ist es aus Gründen besserer Verarbeitbarkeit und Pigmentaufnahme günstig, die Dispersionen bei der Lackherstellung auf bestimmte pH-Werte, z. B. 7,5—8,5 zu bringen. Meist verwendet man dazu die bereits zur Neutralisation benutzen Amine. Außerdem können zusätzliche Hilfsstoffe wie Verlaufmittel, Vernetzungskatalysatoren und dgl. zugefügt werden. Die mit den erfindungsgemäßen Dispersionen hergestellten Lacke lassen sich nach üblicher Applikationstechnik, z. B. durch Tauchen, Spritzen, Gießen auf die zu lackierenden Materialien auftragen. Die dazu notwendige Viskosität stellt man in der Regel durch Zugabe von Wasser ein.

Geringe Zusätze von wassermischbaren Lösemitteln wie Ethanol oder Butylglykol können ebenfalls zugesetzt werden; jedoch soll deren Anteil $<10$ Gew.-% (bezogen auf den fertigen Lack) gehalten werden.

Die aufgetragenen Lackfilme können bei höherer Temperatur, z. B. zwischen 60 und 350°C, vorzugsweise 120 und 240°C, gehärtet werden.

Weiterer Gegenstand der Erfindung ist die Verwendung der erfindungsgemäßen Dispersionen zur Herstellung von Einbrennlacken.

## Beispiele

Die nachfolgend angegebenen Teile sind Gewichtsteile; Prozentangaben bedeuten Gew.-%.

### a) Herstellung der Emulgatoren B

#### Emulgator I

Auf Nonylphenol gepfropftes Ethylenoxid (Molverhältnis 1 : 20) mit folgenden Eigenschaften:

| | |
|---|---|
| Trübungspunkt (1%ig in Wasser): | ca. 100°C |
| Oberflächenspannung (0,1 g/l Wasser): | 44,0 dyn/cm |
| Netzwirkung (DIN 53 901): | ca. 60 sec bei 60°C |
| Fp.: | ca. 30°C |
| HLB-Wert: | 16 |

Emulgatorharz II

In einer 2-l-Rührbecher-Apparatur, die mit Innenthermometer, Rührer, Tropftrichter und Gaseinleitungsrohr versehen ist, werden 400 g eines auf n-Butanol gestarteten Polyethylenoxidalkohols des Molekulargewichts 2000 30 Minuten bei 120° C unter Anlegen eines Vakuums (15 Torr) entwässert. In die auf 100° C abgekühlte Schmelze werden zunächst 2 ml Benzoylchlorid eingerührt; danach fügt man 33,6 g Hexamethylendiisocyanat in einem Guß zu.

Nach 60 Minuten Reaktionszeit wird der Isocyanat-Gehalt der Mischung bestimmt. Der NCO-Gehalt der Mischung beträgt danach 1,8 bis 1,9 Gew.-% NCO.

Nach Abkühlen der Schmelze erhält man die für weitere Umsetzungen geeignete hydrophile Isocyanatkomponente als wachsartig kristalline Substanz.

134 g Trimethylolpropan und 130,7 g Tetrahydrophthalsäureanhydrid werden bei 220° C unter Stickstoffatmosphäre bis zur Säurezahl 4 verestert. Die Viskosität der erhaltenen Vorstufe entspricht einer Auslaufzeit (gemessen als 60%ige Lösung in Dimethylformamid nach DIN 53 211, DIN-Becher 4) von 170 Sekunden.

500 g dieser Vorstufe werden im Vakuum entwässert und anschließend mit 88,2 g der hydrophilen Isocyanatkomponente bei 100 bis 105° C miteinander umgesetzt, bis keine freien Isocyanatgruppen mehr nachweisbar sind.

580 g dieses Produktes werden mit 39 g Tetrahydrophthalsäureanhydrid bei 120° C zu einem Polyhalbester mit einer Säurezahl von ca. 27 umgesetzt.

Zu 610 g dieser Stufe gibt man unter Rühren bei 95 bis 100° C vorsichtig 26,1 g Dimethylethanolamin. Das Harz erstarrt beim Abkühlen zu einer zähelastischen schmelzbaren Masse.

## b) Herstellung der Polyester A

### Beispiel 1

#### Stufe I

3,7 Teile Ethylenglykol, 10,5 Teile Neopentylglykol, 4,5 Teile Hexandiol-1,6, 2,4 Teile Trimethylolpropan, 7,4 Teile Phthalsäureanhydrid, 6,6 Teile Isophthalsäure, 2,9 Teile Adipinsäure und 14,0 Teile Hexahydrophthalsäureanhydrid werden nach einer Aufheizphase in einem geeigneten Reaktor unter Durchleiten vom Stickstoff bei ca. 210° C so lange verestert, bis die Säurezahl 4 beträgt. Die Endviskosität des Harzes, gemessen 50%ig in Ethylglykolacetat nach DIN 53 211, entspricht einer Auslaufzeit von ca. 30 sec.

#### Stufe II

Nach Abkühlen von Stufe I auf 120° C werden 1,4 Teile Bernsteinsäureanhydrid zugegeben und bei 120° C bis zur Säurezahl 20 umgesetzt.

### Beispiel 2

Nach Abkühlen von Stufe I des Beispiels 1 auf 140° C werden 1,4 Teile Glutarsäureanhydrid zugegeben und bei 140° C bis zur Säurezahl 20 umgesetzt.

### Vergleichsbeispiel 1

Nach Abkühlen von Stufe I des Beispiels 1 auf 140° C werden 1,7 Teile Tetrahydrophthalsäureanhydrid zugegeben und bis zur Säurezahl 20 umgesetzt.

### Vergleichsbeispiel 2

#### Stufe I

3,1 Teile Ethylenglykol, 53,0 Teile Neopentylglykol, 53,1 Teile Hexandiol-1,6, 12,1 Teile Trimethylolpropan, 103,6 Teile Phthalsäureanhydrid, 33,2 Teile Isophthalsäure und 14,6 Teile Azelainsäure werden nach einer Aufheizphase in einem geeigneten Reaktor unter Durchleiten von Stickstoff bei 240° C so lange verestert, bis die Säurezahl 3 beträgt. Die Endviskosität des Harzes, gemessen 50%ig in Ethylglykolacetat nach DIN 53 211, entspricht einer Auslaufzeit von ca. 40 sec.

Stufe II

Nach Abkühlung von Stufe I auf 120°C werden 6,4 Teile Maleinsäureanhydrid zugegeben und bei 140°C bis zur Säurezahl 16 umgesetzt.

c) Herstellung der Dispersionen

93 Teile Polyester, 4 Teile Emulgatorharz II und 3 Teile Emulgator I wurden bei 120°C unter Stickstoffatmosphäre in der Schmelze vermischt, auf 80°C gekühlt und unter Rühren ein Gemisch von Wasser und so viel Dimethylethanolamin zugegeben, daß es zur 85%igen Neutralisation der Carboxylgruppen des Polyesters ausreicht. Die Menge Wasser ist so bemessen, daß eine Dispersion mit 40% Harzanteilen resultiert. Nach einer Nachrührzeit bei 60—65°C von ca. 30 Minuten erhält man feinteilige Dispersionen, die auf Raumtemperatur abgekühlt werden.

d) Herstellung von pigmentierten Weißlacken

18 Teile Dispersion, 28 Teile wasserlösliches Melaminharz (95%ig in i-Propanol), 5,0 Teile Butylglykol, 3,3 Teile Wasser und 27,4 Teile $TiO_2$-Pigment werden 15 Minuten auf der Perlmühle verrieben, dann 42 Teile Dispersion und 0,8 Teile p-Toluolsulfonsäure zugegeben und weitere 5 Minuten angerieben. Der so erhaltene Lack hat ein Polyester/Aminoplast-Verhältnis von 90 : 10, ein Pigment/Bindemittel-Verhältnis von 1 : 1, enthält 0,3% (bezogen auf Festharz) p-Toluolsulfonsäure und (bezogen auf den gesamten Lack) 5% Lösungsmittel. Der Lack wird nach einer Reifezeit von 72 Stunden mit einer Spritzpistole auf Aluminiumblech (Al/Mn/Mg-Legierung) aufgebracht und bei 224°C 40 Sekunden eingebrannt. Bei Verwendung der erfindungsgemäßen Dispersionen erhält man hochglänzende Überzüge, vgl. Tabelle.

In der Tabelle ist die Lagerstabilität der Aminoplast-freien Dispersionen mit aufgeführt. Zu ihrer Ermittlung wurden die Dispersionen bei 50°C gelagert und der Beginn des Auftretens von nicht redispergierbarem Bodensatz in den Lagerbehältern als Stabilitätskriterium betrachtet.

Tabelle

| | Beispiel 1 | Beispiel 2 | Vergleichsbeispiel 1 | Vergleichsbeispiel 2 |
|---|---|---|---|---|
| aufgesäuert mit | Bernsteinsäureanhydrid | Glutarsäureanhydrid | Tetrahydrophthalsäureanhydrid | Maleinsäureanhydrid |
| Lagerstabilität der Dispersion bei 50°C | >20 Tage | >20 Tage | >7 Tage | >3 Tage |
| Lackeigenschaften: | | | | |
| Gardner-Glanz (DIN 67 530), gemessen nach 2wöchiger Lagerung bei 50°C | | | | |
| 20° | 75 | 48 | 16 | 21 |
| 60° | 93 | 85 | 65 | 75 |
| Buchholzhärte (DIN 53 153) | 86 | 81 | 92 | 78 |
| Haftfestigkeit (DIN 53 151) | GAO | GAO | GAO | GAO |
| Elastizität | gut | gut | schlecht | gut |
| Vergilbung (Elrepho-Apparat Typ DCF-S) | 84,5 | 85,7 | 86,6 | 87,7 |
| Schlagzähigkeit | gut | gut | gut | schlecht |

**Patentansprüche**

1. Wäßrige Dispersionen aus

A) 25 bis 60 Gew.-% ölfreier Polyester mit einem mittleren Molekulargewicht $\bar{M}_n$ von 1000 bis 10 000,
B) 3 bis 15 Gew. -% mindestens eines Emulgators und
C) 25 bis 62 Gew.-% wäßriger Phase,

jeweils bezogen auf die Summe der Komponenten A, B und C, dadurch gekennzeichnet, daß der Polyester A eine Säurezahl von 13 bis 25 besitzt und durch Reaktion eines Polyesters einer Säurezahl unter 8 mit einem Dicarbonsäureanhydrid der Formel

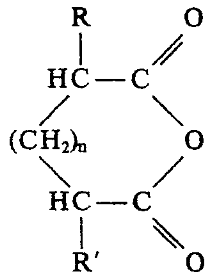

(I)

worin

R, R' ein Wasserstoffatom, einen $C_1-C_8$-Alkylrest oder einen $C_5-C_8$-Cycloalkylrest und
n Null oder 1 bedeuten,

erhältlich ist.

2. Dispersionen nach Anspruch 1, dadurch gekennzeichnet, daß der Polyester A eine Säurezahl von 18 bis 22 besitzt.

3. Dispersionen nach Ansprüchen 1 und 2, dadurch gekennzeichnet, daß der Polyester A eine OH-Zahl von 20 bis 90 besitzt.

4. Dispersionen nach Ansprüchen 1—3, dadurch gekennzeichnet, daß das Dicarbonsäureanhydrid I aus der Reihe Bernsteinsäureanhydrid, Glutarsäureanhydrid, $C_1-C_4$-alkylierte Bernsteinsäureanhydride ausgewählt ist.

5. Verfahren zur Herstellung von Dispersionen aus

A) 25 bis 60 Gew.-% ölfreier Polyester mit einem mittleren Molekulargewicht $\bar{M}_n$ von 1000 bis 10 000,
B) 3 bis 15 Gew.-% mindestens eines Emulgators und
C) 25 bis 62 Gew.-% wäßriger Phase, jeweils bezogen auf die Summe der Komponenten A, B und C,

dadurch gekennzeichnet, daß der Polyester A eine Säurezahl von 13 bis 25 besitzt und durch Reaktion eines Polyesters einer Säurezahl unter 8 mit einem Dicarbonsäureanhydrid der Formel

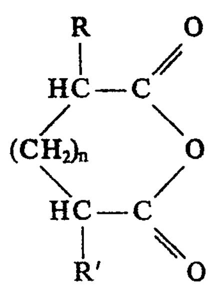

(I)

worin

R, R' ein Wasserstoffatom, einen $C_1-C_8$-Alkylrest oder einen $C_5-C_8$-Cycloalkylrest und
n Null oder 1 bedeuten,

erhältlich ist und daß man den Polyester A in der Schmelze bei Temperaturen von 80 bis 120° C mit dem Emulgator B homogenisiert und in diese Schmelze das Wasser bzw. die wäßrige Phase C oder umgekehrt die Schmelze in das Wasser bzw. in die wäßrige Phase C einrührt.

6. Verfahren nach Anspruch 5, dadurch gekennzeichnet, daß man als wäßrige Phase C eine Mischung aus Wasser und einem primären Amin der Formel

$$R^{10}R^{11}R^{12}C-NH_2 \qquad (II)$$

verwendet, worin

$R^{10}$, $R^{11}$, $R^{12}$ ein Wasserstoffatom oder einen Alkylrest mit 1 bis 6 C-Atomen und gegebenenfalls einer Hydroxylgruppe bedeuten mit der Maßgabe, daß mindestens einer der Reste von Wasserstoff verschieden ist.

7. Verfahren nach Anspruch 6, dadurch gekennzeichnet, daß das Neutralisationsmittel der wäßrigen Phase C aus der Reihe tert.-Butylamin, Isopropanolamin, 2-Amino-2-methylpropanol, 3-Amino-1-propanol und 2-Amino-1-methyl-propandiol-1,3 ausgewählt ist.

8. Verwendung der Dispersionen nach Ansprüchen 1—4 zur Herstellung von Einbrennlacken.

## Claims

1. Aqueous dispersions consisting of:

A) from 25 to 60% by weight of oil-free polyester having an average molecular weight $\bar{M}_n$ of from 1000 to 10 000,
B) from 3 to 15% by weight of at least one emulsifier, and
C) from 25 to 62% by weight of aqueous phase,

in each case based on the total of components A, B and C, characterized in that the polyester A has an acid number of from 13 to 25 and it may be obtained by the reaction of a polyester having an acid number of less than 8 with a dicarboxylic acid anhydride corresponding to the formula:

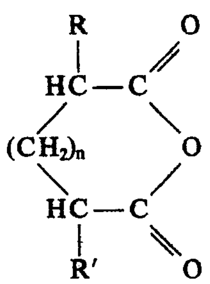

(I)

wherein

R and R′ represent a hydrogen atom, a $C_1-C_8$ alkyl radical or a $C_5-C_8$ cycloalkyl radical, and
n represents zero or 1.

2. Dispersions according to claim 1, characterized in that the polyester A has an acid number of from 18 to 22.

3. Dispersions according to claims 1 and 2, characterized in that the polyester A has an OH number of from 20 to 90.

4. Dispersions according to claims 1 to 3, characterized in that the dicarboxylic acid anhydride I is selected from succinic acid anhydride, glutaric acid anhydride and $C_1-C_4$-alkylated succinic acid anhydrides.

5. A process for the preparation of dispersions consisting of:

A) from 25 to 60% by weight of oil-free polyester having an average molecular weight $\bar{M}_n$ of from 1000 to 10 000,
B) from 3 to 15% by weight of at least one emulsifier, and
C) from 25 to 62% by weight of aqueous phase, in each case based on the total of components A, B and C,

characterized in that polyester A has an acid number of from 13 to 25 and it may be obtained by the reaction of a polyester having an acid number of less than 8 with a dicarboxylic acid anhydride corresponding to the formula:

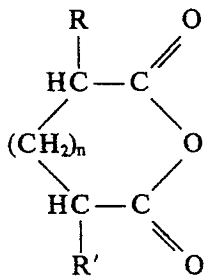

(I)

wherein

R and R′ represent a hydrogen atom, a $C_1-C_8$ alkyl radical or a $C_5-C_8$ cycloalkyl radical, and
n represents zero or 1,

and the polyester A is homogenised in the melt at a temperature of from 80 to 120°C with the emulsifier B, and the water or the aqueous phase C is stirred into this melt or conversely, the melt is stirred into the water or into the aqueous phase C.

6. A process according to claim 5, characterized in that as the aqueous phase C, a mixture of water and a primary amine corresponding to the formula:

$$R^{10}R^{11}R^{12}C-NH_2 \quad \text{(II)}$$

wherein

$R^{10}$, $R^{11}$ and $R^{12}$ represent a hydrogen atom or an alkyl radical having from 1 to 6 carbon atoms and optionally a hydroxyl group, provided that at least one of the radicals does not represent hydrogen.

7. A process according to claim 6, characterized in that the neutralisation agent of the aqueous phase C is selected from tert.-butylamine, isopropanolamine, 2-amino-2-methylpropanol, 3-amino-1-propanol and 2-amino-1-methyl-propanediol-1,3.

8. The use of the dispersions according to claims 1 to 4 for the production of stoving lacquers.

**Revendications**

1. Dispersions aqueuses de

A) 25 à 60% en poids de polyester exempt d'huile à un poids moléculaire moyen $\overline{M}n$ de 1000 à 10 000,
B) 3 à 15% en poids d'au moins un agent émulsionnant et
C) 25 à 62% en poids de phase aqueuse,

toutes ces proportions se rapportant à la somme des composants A, B et C, caractérisées en ce que le polyester A possède un indice d'acide de 13 à 25 et a été obtenu par réaction d'un polyester d'indice d'acide inférieur à 8 avec un anhydride d'acide dicarboxylique de formule

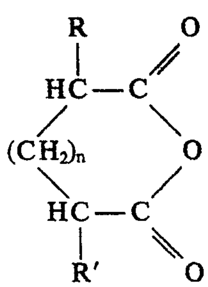

(I)

dans laquelle

R, R′ représentent un atome d'hydrogène, un groupe alkyle en C1—C8 ou cycloalkyle en C5—C8 et
n est égal à 0 ou 1.

2. Dispersions selon la revendication 1, caractérisées en ce que le polyester A a un indice d'acide de 18 à 22.

3. Dispersions selon les revendications 1 et 2, caractérisées en ce que le polyester A a un indice d'OH de 20 à 90.

4. Dispersions selon les revendications 1 à 3, caractérisées en ce que l'anhydride d'acide dicarboxylique I est choisi dans le groupe formé par l'anhydride succinique, l'anhydride glutarique, les anhydrides d'acides succiniques portant un substituant alkyle en C1—C4.

5. Procédé de préparation de dispersion de

A) 25 à 60% en poids d'un polyester exempt d'huile à un poids moléculaire moyen $\overline{M}n$ de 1000 à 10 000,
B) 3 à 15% en poids d'au moins un agent émulsionnant et
C) 25 à 62% en poids de phase aqueuse, toutes ces proportions se rapportant à la somme des composants A, B et C,

caractérisé en ce que le polyester A a un indice d'acide de 13 à 25 et a été obtenu par réaction d'un polyester d'indice d'acide inférieur à 8 avec un anhydride d'acide dicarboxylique de formule

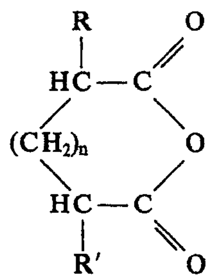

(I)

dans laquelle

R, R' représentent un atome d'hydrogène, un groupe alkyle en C1—C8 ou cycloalkyle en C5—C8 et
n est égal à 0 ou 1,

et en ce que l'on homogénéise le polyester A à l'état fondu à des températures de 80°C à 120°C avec l'agent émulsionnant B et on introduit l'eau ou la phase aqueuse C dans cette masse fondue ou inversement on introduit sous agitation la masse fondue dans l'eau ou dans la phase aqueuse C.

6. Procédé selon la revendication 5, caractérisé en ce que l'on utilise en tant que phase aqueuse C un mélange d'eau et d'une amine primaire de formule

$$R^{10}R^{11}R^{12}C-NH_2 \qquad (II)$$

dans laquelle

$R^{10}$, $R^{11}$, $R^{12}$ représentent un atome d'hydrogène ou un groupe alkyle en C1—C6 et le cas échéant un groupe hydroxy, étant spécifié qu'un au moins de ces symboles a une signification autre que l'hydrogène.

7. Procédé selon la revendication 6, caractérisée en ce que l'agent neutralisant de la phase aqueuse C est choisi dans le groupe, formé par la tert-butylamine, l'isopropanolamine, le 2-amino-2-méthylpropanol, le 3-amino-1-propanol et le 2-amino-1-méthyl-propane-diol-1,3.

8. Utilisation des dispersions selon les revendications 1 à 4, pour la préparation de peintures et vernis à cuire.